# EUROPÄISCHE PATENTSCHRIFT

(11) **EP 4 438 810 B1**
(45) Veröffentlichungstag und Bekanntmachung des Hinweises auf die Patenterteilung: **10.12.2025**
(21) Anmeldenummer: 23164330.5
(22) Anmeldetag: 27.03.2023
(51) Int. Cl.: E01C 19/48, B60H 1/00, B60N 2/56

(54) **STRASSENBAUMASCHINE MIT SITZKONSOLE ZUR FRISCHLUFTVERSORGUNG SOWIE VERFAHREN**
ROAD CONSTRUCTION MACHINE WITH SEAT CONSOLE FOR SUPPLYING FRESH AIR AND METHOD
ENGIN DE CONSTRUCTION DE ROUTES AVEC CONSOLE DE SIÈGE POUR L'ALIMENTATION EN AIR FRAIS ET PROCÉDÉ

(43) Veröffentlichungstag der Anmeldung: 02.10.2024
(73) Patentinhaber: Joseph Vögele AG, 67067 Ludwigshafen (DE)
(72) Erfinder: Erdtmann, Bernhard, 68535 Edingen Neckarhausen (DE); Weber, Stefan, 67127 Rödersheim-Gronau (DE); Pontius, Johannes, 66839 Schmelz (DE); Riffel, Jan, 68307 Mannheim (DE); Kempf, Felix, 68159 Mannheim (DE)
(74) Vertreter: Grünecker Patent- und Rechtsanwälte PartG mbB

(56) Entgegenhaltungen:
- EP-A1- 3 939 864
- EP-A1- 4 052 614
- EP-A1- 4 092 191
- EP-B1- 3 800 077
- JP-A- 2006 218 902
- JP-A- H10 175 424

## Beschreibung

Die vorliegende Erfindung bezieht sich auf eine Straßenbaumaschine mit einer Sitzkonsole zur Frischluftversorgung sowie auf ein Verfahren zum Erzeugen einer Frischluftströmung mittels einer Sitzkonsole einer Straßenbaumaschine.

Aktuell werden an Straßenfertigern sogenannte Ventilationssysteme eingesetzt, deren grundlegende Funktion darin besteht, Bitumen- und ölhaltige Dämpfe über dem Schneckenraum abzusaugen. Die abgesaugten Dämpfe werden mittels eines Ventilators und eines Schlauchsystems von den Arbeitsplätzen weggeleitet. Ein derartiges Ventilationssystem wird beispielsweise in der DE 10 2012 011 693 A1 offenbart. Ein solches Absaugsystem nimmt allerdings viel Platz am Straßenfertiger ein und verhindert teilweise für den Fahrer die Sicht nach hinten zur Einbaubohle.

US 6,290,286 B1 offenbart ein Baggerfahrzeug mit einer geschlossenen Fahrerkabine. Innerhalb der geschlossenen Fahrerkabine ist hinter einem Fahrersitz auf einem Kabinenboden eine Klimaeinrichtung installiert, von welcher aus zu einem vor dem Fahrersitz positionierten Bedienpult Luftversorgungsleitungen führen.

WO 2022/044586 A1 offenbart einen Zuschauersitz beziehungsweise einen Flugzeugsitz mit einer an der Kopfstütze installierten Luftbarriereeinrichtung, die zur Frischluftversorgung geeignet ist. Damit soll vor allem die Verbreitung von Bakterien und Viren in abgeschlossenen Räumen verhindert werden.

EP 3 636 466 A1 offenbart ein Luftreinigungsgerät zur Anbringung an einem im Fahrzeuginnenraum installierten Fahrzeugsitz.

EP 4 092 191 A1 offenbart einen Straßenfertiger beziehungsweise ein Beschickerfahrzeug für einen Straßenfertiger mit einer Luftbarriereeinrichtung. Die Luftbarriereeinrichtung kann an einer Sitzkonsole des Fahrerbedienstands Düsen zum Erzeugen einer Luftwand im Bereich des Fahrers aufweisen, um Aerosole und/oder Dämpfe vom Fahrer fernzuhalten. Die Luftbarriereeinrichtung kann mittels eines im Motorraum zur Kühlung des Motors eingesetzten Ventilators beziehungsweise mittels einer darin installierten Filtereinheit betrieben werden.

Aufgabe der Erfindung ist es, an einer während des Betriebs bitumenhaltigen Dämpfen ausgesetzten Straßenbaumaschine die Luftqualität für Bediener mittels einfacher, konstruktiver Mittel zu verbessern.

Diese Aufgabe wird gelöst anhand einer Straßenbaumaschine nach Anspruch 1. Ferner wird diese Aufgabe gelöst anhand eines Verfahrens zum Erzeugen einer Frischluftströmung gemäß Anspruch 20.

Vorteilhafte Weiterbildungen der Erfindung sind durch die Gegenstände der Unteransprüche gegeben.

Die Erfindung betrifft eine Straßenbaumaschine, die in Form eines Straßenfertigers oder eines Beschickerfahrzeugs für einen Straßenfertiger vorliegt. Die erfindungsgemäße Straßenbaumaschine umfasst einen zumindest zu einer Seite hin offen ausgebildeten Fahrerbedienstand für einen Fahrer der Straßenbaumaschine. Dieser Fahrerbedienstand weist mindestens eine Sitzkonsole auf, die erfindungsgemäß ein Frischluftsystem umfasst.

Durch seine ohnehin offene Bauweise an Straßenfertigern oder Beschickerfahrzeugen ist der Fahrerbedienstand an solchen Straßenbaumaschinen grundsätzlich gut durchlüftet. Dennoch kann es sein, dass durch die offenen Seiten des Fahrerbedienstands bitumenhaltige Dämpfe vom Gutbunker bzw. vom Schneckenraum in den Fahrerbedienstand gelangen können. Bekannte, an Straßenfertigern verwendete Absaugsysteme versuchen direkt am Ort der Entstehung der Dämpfe, diese abzusaugen und in einem Bereich oberhalb der Arbeitsplätze, beispielsweise oberhalb des Dachs des Fahrerbedienstands, auszublasen.

Die Erfindung weicht von dieser bisherigen, typischen Vorgehensweise dahingehend ab, dass die Verbesserung der Luftqualität direkt am Arbeitsplatz des Bedieners durch das an der Sitzkonsole vorgesehene Frischluftsystem geschieht. Damit lässt sich in der unmittelbaren Umgebung des Bedieners auf der Sitzkonsole eine Frischluftanreicherung erzeugen. Der Bediener sitzt damit direkt in einer nach außen hin offenen Frischluftatmosphäre, durch die jedoch außerhalb davon entstehende Dämpfe, wenn überhaupt nur noch in sehr eingeschränktem Maße bis zum Bediener vordringen können. Selbst aus dem Gutbunkerbereich oder dem Schneckenraum bis in den offenen Fahrerbedienstand gestiegene Dämpfe können damit durch das unmittelbar dem auf der Sitzkonsole befindlichen Bediener zugeordnete Frischluftsystem neutralisiert werden, d.h. auf ein Konzentrationsniveau gebracht werden, das für den Bediener unkritisch ist.

Das erfindungsgemäße Frischluftsystem schafft damit in einer offenen Arbeitsumgebung eine Schutzatmosphäre aus Frischluft für den Bediener, indem es den Bediener aus unmittelbarer Nähe, sprich direkt an der Sitzkonsole mit Frischluft, zusätzlich zu der über die offen ausgebildete Seite(n) des Fahrerbedienstands gegebenen Frischluftversorgung versorgt. Damit lassen sich die Arbeitsbedingungen für den auf der Sitzkonsole befindlichen Bediener stark verbessern. Mittels dieser zusätzlich auf dem offen gebildeten Fahrerbedienstand zur Verfügung gestellten Frischluftversorgung anhand des erfindungsgemäßen Frischluftsystems lassen sich an dementsprechend ausgestatteten Straßenfertigern beziehungsweise Beschickerfahrzeugen die gesetzlich geforderten Grenzwerte für Luftbedingungen zuverlässig einhalten.

Dadurch, dass das erfindungsgemäße Frischluftsystem unmittelbar an der Sitzkonsole der Straßenbaumaschine angeordnet ist, nimmt es wenig Platz in Anspruch. Damit werden die an der Straßenbaumaschine ablaufenden Arbeitsprozesse in ihren täglichen Routinen nicht gestört. Das erfindungsgemäß an der Sitzkonsole installierte Frischluftsystem ist einfach zu bedienen sowie kostengünstig in dessen Herstellung.

Eine vorteilhafte Variante sieht vor, dass die Sitzkonsole einen, insbesondere schwenkbar und/oder verschiebbar gelagerten, Konsolenboden aufweist, an dessen Unterseite mindestens eine Ventilatoreinheit des Frischluftsystems befestigt ist. In dieser Position ist die Ventilatoreinheit gut geschützt untergebracht. Ferner werden aus dieser Position wenig Betriebsgeräusche der Ventilatoreinheit vom Bediener auf der Sitzkonsole wahrgenommen, da der Konsolenboden dazwischen hervorragend als Geräuschbarriere funktioniert. Damit hat das Frischluftsystem selbst bei einer hohen Drehzahl der Ventilatoreinheit einen geräuscharmen Betrieb. Hinzu kommt, dass sich die Ventilatoreinheit an der Unterseite eines schwenkbar gelagerten Konsolenbodens, in dessen ausgeschwenkten Zustand in einer Position befindet, in welcher sie über die Fahrerbedienplattform hinausgeschwenkt ist, sodass sie von unten her, beispielsweise für Servicearbeiten, gut zugänglich ist.

Eine Variante sieht vor, dass die Ventilatoreinheit zwar an der Sitzkonsole, aber daran an anderer Stelle installiert ist, beispielsweise hinter einem (Fahrer-)Sitz der Sitzkonsole, insbesondere hinter einer Rückenlehne.

Eine vorteilhafte Ausführungsform sieht vor, dass die Ventilatoreinheit innerhalb einer durch den Konsolenboden geschaffenen Stufe aufgenommen ist. Durch diese Stufe wird für die Ventilatoreinheit ein ausreichend großer Montageraum geschaffen. Außerdem lassen sich darin weitere Einheiten des Frischluftsystems gut aufnehmen, beispielsweise eine dafür vorgesehene Filtereinheit. Die unterhalb in der Stufe untergebrachten Einheiten des Frischluftsystems sind technisch sinnvoll aufgeräumt, da sie auf dem Konsolenboden keine Stolperfallen bilden.

Gemäß einer Ausführungsform der Erfindung ist die Ventilatoreinheit zur lösbaren oder festen Anbringung einer Filtereinheit konfiguriert. Mittels einer lösbaren Anbringung lässt sich von der Ventilatoreinheit die Filtereinheit abbauen, während die Ventilatoreinheit an der Sitzkonsole verbleibt. Dadurch kann die Filtereinheit problemlos ausgewechselt werden.

Zweckmäßig wäre es, wenn die Ventilatoreinheit mindestens einen elektrisch, hydraulisch oder pneumatisch betriebenen Ventilator aufweist. Ein elektrischer Ventilator könnte beispielsweise mit einer entlang der Unterseite des Konsolenbodens geführten Stromversorgungsleitung verbunden sein. Ein hydraulischer bzw. pneumatischer Ventilator könnte beispielsweise mit einem entlang der Unterseite des Konsolenbodens geführten Hydraulik- bzw. Pneumatiksystem verbunden sein.

Insbesondere ist der Ventilator ein Radialventilator oder ein Axialventilator. Als Radialventilator kann der Ventilator insbesondere eine geringe Bauhöhe aufweisen und lässt sich damit in kompakter Weise unterhalb des Konsolenbodens montieren. Außerdem ist ein Radialventilator vorteilhaft, um die Sitzkonsole auf beiden Seiten mit Frischluft zu versorgen.

Denkbar wäre es, dass die Ventilatoreinheit mehrere, parallel ansteuerbare Ventilatoren vorsieht, insbesondere zwei an der Unterseite des Konsolenbodens montierte Ventilatoren aufweist, die in separaten Frischluftsträngen Frischluft fördern. Hierbei könnte ein Betrieb der jeweiligen Ventilatoren unabhängig voneinander angesteuert werden, um beispielsweise wahlweise in verschiedenen Bereichen der Sitzkonsole, ggf. mit unterschiedlicher Intensität, Frischluft zu erzeugen. Außerdem können durch den Einsatz mehrerer Ventilatoren ein niedertouriger, d.h. geräuschreduzierter Ventiltorbetrieb gewährleistet und trotz niedriger Drehzahl dennoch eine hohe Frischluftversorgung stattfinden.

Gemäß einer Ausführungsform der Erfindung weist das Frischluftsystem mindestens eine Filtereinheit auf, die einer Ansaugseite und/oder an einer Ausblasseite der Ventilatoreinheit angeordnet ist. Ist die Filtereinheit an der Ansaugseite angeordnet, dann kann der Ventilator von Verunreinigung geschützt werden. Der Ventilator erzeugt bei dieser Variante einen Unterdruck und saugt die durch die Filtereinheit gereinigte Umgebungsluft ein, sodass aus ihm an dessen Ausblasseite gefilterte Frischluft austritt. Ist die Filtereinheit an der Ausblasseite angeordnet, drückt der Ventilator ungefilterte Umgebungsluft durch die an seinem Ausgang positionierte Filtereinheit hindurch. Sofern an der Ansaugseite und an der Ausblasseite jeweils eine Filtereinheit angeordnet ist, kann die von der Ventilatoreinheit angesaugte, gefilterte Luft auf der Ausblasseite nochmals gefiltert werden.

Vorzugsweise befindet sich die Filtereinheit gemeinsam mit der Ventilatoreinheit unterhalb des Konsolenbodens oder gemeinsam mit der Ventilatoreinheit an anderer Stelle der Sitzkonsole, beispielsweise hinter einer Sitzrückenlehne. Die Filtereinheit vor allem unter dem Konsolenboden gut geschützt positioniert und ist bei ausgeschwenktem Konsolenboden problemlos von unten her zugänglich, kann mithin gut ausgetauscht werden. Hinzu kommt, dass bei einer Unterbringung der Filtereinheit und der Ventilatoreinheit unterhalb des Konsolenbodens, diese keine Stolperfallen auf dem Konsolenboden, sprich im Bereich des Bedieners bilden.

Für Servicezwecke wäre es besonders dienlich, wenn die Filtereinheit und die Ventilatoreinheit separate, aneinander koppelbare Module ausbilden, sprich nicht in einem gemeinsamen Gehäuse untergebracht sind. Damit kann die Filtereinheit von der Ventilatoreinheit abgebaut werden, ohne dass Gehäuseteile der Ventilatoreinheit auseinandergebaut werden müssen.

Denkbar wäre es, dass die Filtereinheit als Aufsteckmodul zur werkzeuglosen Anbringung an der Ventilatoreinheit konfiguriert ist. Insbesondere liegt die Filtereinheit als eine aus mehreren Filterelementen zusammengefasste, in sich stabile Filteranordnung vor, die ohne gesondertes Filtergehäuse auskommt. Damit reduziert sich der Reinigungsaufwand auf der Baustelle. Beispielsweise könnte die Filtereinheit zwei fest miteinander verbundene Filterelemente, insbesondere zwei miteinander verklebte Aktivkohlefilter, sowie einen an den beiden Filterelementen befestigten Vorfilter, insbesondere einen Schaumstofffilter oder einen Vliesfilter, aufweisen. Diese miteinander verbundenen Filterelemente einschließlich des Vorfilters können insbesondere an einem Stück als Einheit ein- und ausgebaut werden.

Zweckmäßig wäre es, wenn das Frischluftsystem mindestens eine Düseneinheit aufweist, die sich sowohl neben einer Kopfstütze der Sitzkonsole als auch neben einer Rückenlehne der Sitzkonsole anordnen lässt. Damit kann die Düseneinheit vom Bediener individuell platziert werden. Insbesondere umfasst das Frischluftsystem eine Halterung, die sich zumindest abschnittsweise seitlich der Kopfstütze und seitlich der Rückenlehne erstreckt, wobei sich die Düseneinheit an der Halterung in verschiedenen Positionen befestigen lässt, um entweder der Kopfstütze oder der Rückenlehne zugeordnet zu sein. Alternativ dazu könnte die Düseneinheit auch an einer festen Stelle installiert sein.

Gemäß einer Ausführungsform weist das Frischluftsystem mindestens eine weitere Düseneinheit für Frischluft auf, die sich seitlich eines Sitzbodens der Sitzkonsole in verschiedenen Positionen anordnen lässt. Damit kann die Düseneinheit bei einer Längsverstellung des Sitzbodens dementsprechend weiter vorne oder weiter hinten positioniert werden. Alternativ dazu könnte die weitere Düseneinheit auch an einer festen Stelle installiert sein.

Positionen der Düseneinheiten können insbesondere durch An- und Abschrauben, durch Verschieben und/oder durch magnetische Halter festgelegt werden.

Denkbar wäre es, dass die Düseneinheit und die weitere Düseneinheit gemeinsam oder einzeln zur Frischluftversorgung betrieben werden können. Dafür kann das Frischluftsystem mit einer Ventileinheit ausgestattet sein.

Eine Variante sieht vor, dass das Frischluftsystem auf beiden Seiten der Sitzkonsole die zuvor in den beiden vorangehenden Absätzen beschriebenen Düseneinheiten aufweist. Damit kann der Bediener auf beiden Seiten der Sitzkonsole mit Frischluft versorgt werden.

Eine Variante sieht vor, dass die Düseneinheit, d.h. mindestens eine der vorangehend beschriebenen Düseneinheiten, mindestens eine Frischluftöffnung mit verstellbaren Lamellen aufweist.

Damit lässt sich die Richtung des Frischluftstroms bestimmen. Die Richtung des Frischluftstroms kann damit gezielt vom Bediener eingestellt werden.

Gemäß einer Ausführungsform der Erfindung weist die Düseneinheit, d.h. mindestens eine der vorangehend beschriebenen Düseneinheiten, sowohl mindestens eine Frischluftöffnung für eine Austrittsströmung von Frischluft, beispielsweise eine Rundluftöffnung, als auch mindestens eine Düse für eine gewünschte andere Austrittsströmung, beispielsweise eine Flachdüse bzw. Fächerdüse, zum Ausbilden einer Luftbarriere auf. Denkbar wäre der Einsatz einer Ventilatoreinheit zum Ausbilden der Austrittsströmung für Frischluft und der Einsatz einer gesonderten Ventilatoreinheit zum Ausbilden der Luftbarriere. Die beiden Ventilatoreinheiten lassen sich ggf. unabhängig voneinander mit verschiedenen Drehzahlen steuern. Damit lassen sich auch unterschiedliche Strömungsgeschwindigkeiten an verschiedenen Stellen der Sitzkonsole einstellen.

Insbesondere lässt sich die Düse zum Ausbilden der Luftbarriere derart einstellen, dass sich die Frischluftatmosphäre länger im Bereich des Bedieners halten lässt. Die Luftbarriere könnte beispielsweise vom Bediener aus betrachtet außerhalb der ihm näher zugewandten Frischluft-Austrittsströmung gebildet sein, sodass sich die beim Bediener gebildete Frischluft-Austrittsströmung nicht nach außen hin ausbreitet, sondern im Bereich des Bedieners konzentriert vorliegt. Die Luftbarriere liegt somit als Hilfsströmung zur vorteilhaften Aufrechterhaltung der Frischluftatmosphäre im Bereich des Bedieners vor. Die Frischluftströmung aus der Sitzkonsole und/oder eine Frischluftströmung aus dem Bedienpult kann dabei in die Luftbarriere derart eingeleitet werden, dass sie dadurch im Bereich des Bedieners gezielt die Atmosphäre mit Frischluft anreichert. Außerdem lassen sich durch die an der Sitzkonsole gebildete Luftbarriere von außen in den Fahrerbedienstand hineinziehende, bitumenhaltige Dämpfe vom Bediener abschirmen.

Vorzugsweise führen von der Ventilatoreinheit wenigstens ein, insbesondere mehrere Luftkanäle bzw. Frischluftleitungen weg, um jeweils mindestens eine Düseneinheit mit Frischluft zu versorgen. Beispielsweise könnten von einem Radialventilator zwei Luftkanäle bzw. Frischluftleitungen in radialer Richtung von diesem wegführen, insbesondere gegenüberliegend am Radialventilator abgebracht sein, um auf beiden Seiten der Sitzkonsole Düseneinheiten mit Frischluft zu versorgen. Die Ventilatoreinheit kann dabei als zentraler Frischluftversorger für mehrere beidseitig der Sitzkonsole positionierten Düseneinheiten zum Einsatz kommen.

Insbesondere ist die Düseneinheit verstellbar, beispielsweise schwenkbar, angeordnet. Beispielsweise kann eine neben der Kopfstütze montierte Düseneinheit in Abhängigkeit davon, wie weit die Kopfstützen auf der Rückenlehne ein- bzw. ausgefahren ist, nach unten oder nach oben geschwenkt montiert sein, um den Bediener auf dem Sitz effektiv mit Frischluft zu versorgen.

Gemäß einer vorteilhaften Variante kann das an der Sitzkonsole vorgesehene Frischluftsystem gemeinsam mit einem weiteren, an einem Bedienpult des Fahrerbedienstands angeordneten Frischluftsystem eingesetzt werden. Die beiden Frischluftsysteme können sich insbesondere derart ergänzen, dass sie zusammen auf dem Fahrerbedienstand einen größeren Bereich mit einer gewünschten Frischluftatmosphäre schaffen, insbesondere für eine erhöhte Frischluftversorgung im Bereich des Bedieners bzw. Fahrers sorgen. Insbesondere können die beiden Frischluftsysteme derart aufeinander abgestimmt eingestellt sein, dass der Bediener selbst durch Verlassen der anhand des an der Sitzkonsole ausgebildeten Frischluftsystems ausgebildeten Frischluftzone innerhalb einer auf dem Fahrerbedienstand mittels des anderen Frischluftsystems geschaffenen Frischluftzone verbleibt.

Denkbar wäre es, dass die beiden Frischluftsysteme zum Erzeugen entgegengerichteter, aufeinandertreffender Frischluftströme konfiguriert sind, die insbesondere zumindest bereichsweise von der Luftbarriere, die mittels der Düseneinheit an der Kopfstütze gebildet wird, umgeben sind. Dies führt zu einem Frischluftverwirbelungseffekt im Bereich des Bedieners, wodurch sich die Frischluftatmosphäre länger im Bereich des Bedieners aufrechthalten lässt. Außerdem können dadurch die jeweiligen Geschwindigkeiten der aufeinandertreffenden Frischluftströme reduziert werden, was sich in unmittelbarer Nähe des Bedieners, insbesondere auf Kopfhöhe des Bedieners, besonders angenehm bemerkbar macht. Vorstellbar wäre es, dass zum Erzielen dieses Effekts ein Aufeinandertreffen der Frischluftströme auf einer vorbestimmten Höhe vorderhalb des Bedieners einstellbar ist.

Eine Variante sieht vor, dass das Frischluftsystem der Sitzkonsole und/oder das Frischluftsystem des Bedienpults zum Temperieren des Frischluftstroms konfiguriert ist. Damit kann einerseits für den Bediener bzw. Fahrer eine Frischluftatmosphäre mit einer gewünschten Temperatur erzeugt werden. Andererseits können damit in Abhängigkeit von Temperaturunterschieden der Frischluftströmungen thermische Strömungseffekte genutzt werden, um gezielt eine Frischluftanreicherung im Bereich des Bedieners bzw. Fahrers zu erzeugen.

Möglich wäre es, dass die Sitzkonsole eine schwenkbar, rotierbar und/oder querverschiebbar auf dem Fahrerbedienstand gelagerte Fahrersitzkonsole ist, wobei das daran vorgesehene Frischluftsystem diese Bewegungen mitgehen kann.

Denkbar wäre es, dass durch Drehzahlanpassung der Ventilatoreinheit ein aus dem Frischluftsystem ausströmender Frischluftvolumenstrom variierbar ist. Dies bietet beispielsweise die Möglichkeit, dass die Frischluftversorgung gesteigert werden kann, wenn sich an der Straßenbaumaschine eine besonders hohe Dampfentwicklung ergibt, beispielsweise während eines Material-übergabeprozesses von Einbaumaterial in einen Gutbunker der Straßenbaumaschine. Eine solche Drehzahlanpassung kann automatisch erfolgen oder manuell eingestellt werden.

Vorstellbar wäre es, dass zur Drehzahlanpassung der Ventilatoreinheit direkt an der Sitzkonsole, insbesondere direkt am Frischluftsystem, an einem Bedienpult des Fahrerbedienstands und/oder an einem gesondert vom Fahrerbedienstand ausgebildeten Außenbedienstand der Straßenbaumaschine mindestens ein Bedienelement vorgesehen ist. Bei der letztgenannten Variante könnte am Straßenfertiger ein Bohlenbediener, wenn er bemerkt, dass es beim Einbau zu einer hohen Dampfentwicklung kommt, die Frischluftversorgung für seinen Kollegen auf dem Fahrerbedienstand dementsprechend erhöhen.

Das Bedienelement könnte beispielsweise in Form eines Drehreglers ausgebildet sein. Eine Variante sieht vor, dass ein Touch-Display als Bedienelement vorgesehen ist, insbesondere ein am Bedienpult des Fahrerbedienstands vorgesehenes Touch-Display.

Vorzugsweise liegt das Frischluftsystem als Hang-On-Einrichtung für die Sitzkonsole vor, sodass es sich problemlos an bestehenden Sitzkonsolen als Nachrüstset montieren lässt. Eine Variante sieht vor, dass das Frischluftsystem in der Sitzkonsole integriert ausgebildet ist, wodurch sich ein besonders kompakter Aufbau ergibt. Insbesondere bei einer Hang-On-Einrichtung wäre es denkbar, dass das Bedienelement, beispielsweise ein Drehregler, direkt an der Ventilatoreinheit ausgebildet ist.

Eine Variante sieht vor, dass die Sitzkonsole auf beiden Seiten des Fahrerbedienstands montierbar ist. Denkbar wäre es, dass die Sitzkonsole in zweifacher Ausführung auf dem Fahrerbedienstand installiert ist. Eine vorteilhafte Variante sieht vor, dass auf dem Fahrerbedienstand eine Sensorik verbaut ist, um zu erfassen, auf welcher der beiden Sitzkonsolen sich ein Bediener bzw. Fahrer befindet. Basierend auf Messwerten der Sensorik könnte das Frischluftsystem der besetzten Sitzkonsole automatisch aktivierbar sein bzw. ließe sich das Frischluftsystem der unbesetzten Sitzkonsole automatisch deaktivieren. Somit kann automatisch auf einen Sitzplatzwechsel reagiert werden.

Die Erfindung betrifft ferner ein Verfahren zum Erzeugen einer Frischluftströmung mittels einer Sitzkonsole eines zur Seite hin offen ausgebildeten Fahrerbedienstands einer Straßenbaumaschine, die als Straßenfertiger oder als Beschickerfahrzeug für einen Straßenfertiger vorliegt. Der zur Seite hin offen ausgebildete Fahrerbedienstand sorgt bereits dafür, dass der Bereich auf dem Fahrerbedienstand mit Umgebungsluft durchlüftet wird, und kann damit zusätzlich anhand der Sitzkonsole mit gefilterter Frischluft versorgt werden. Damit kann die Frischluftatmosphäre des ohnehin über die Seiten mit Umgebungsluft durchlüfteten Fahrerbedienstands eines Straßenfertigers oder eines Beschickerfahrzeugs durch die Frischluftversorgung mittels der Sitzkonsole gezielt in unmittelbarer Nähe des auf der Sitzkonsole positionierten Bedieners bzw. Fahrers zusätzlich verbessert werden. Dies bedeutet, dass bei der Erfindung die durch den offenen Aufbau des Fahrerbedienstands auf diesem erzeugte durchlüftete Atmosphäre im Bereich des Bedieners gezielt durch die Sitzkonsole, sprich ein daran ausgebildetes Frischluftsystem, in Sachen Luftqualität verbessert wird.

Vorzugsweise wird unterhalb eines, vorzugsweise schwenkbar gelagerten, Konsolenbodens der Sitzkonsole Umgebungsluft angesaugt und gefiltert, um als Frischluft zu mehreren Düseneinheiten, die um einen Sitz der Sitzkonsole herum angeordnet sind, weitertransportiert zu werden. Das Ansaugen und Filtern von Umgebungsluft unterhalb des Konsolenbodens sorgt für einen geräuscharmen Betrieb des Frischluftsystems und bietet des Weiteren einen kompakten Aufbau.

Vorstellbar wäre es, dass durch das Frischluftsystem sowohl seitlich einer Kopfstütze als auch seitlich eines Sitzbodens des (Fahrer-)Sitzes, insbesondere auf beiden Seiten der Sitzkonsole, Frischluftströme erzeugt werden, damit ein auf der Sitzkonsole sitzender Bediener bzw. Fahrer aus mehreren Richtungen mit Frischluft versorgt werden kann.

Eine Ausführungsform sieht vor, dass das an der Sitzkonsole vorgesehene Frischluftsystem dafür eingesetzt wird, mindestens eine Frischluftströmung mit einer ersten Geschwindigkeit und eine (Frisch-)Luftströmung mit einer zweiten Geschwindigkeit zu erzeugen, die größer ist als die erste Geschwindigkeit. Insbesondere kann die (Frisch-)Luftströmung mit der zweiten Geschwindigkeit in Form einer Luftbarriere erzeugt werden. Denkbar wäre es, dass die Luftbarriere in Form eines Lufttunnels erzeugt wird, der zumindest bereichsweise die Frischluftströmung umgibt.

Denkbar wäre es, dass ein zur Frischlufterzeugung an der Sitzkonsole angeordnetes Frischluftsystem mit einem weiteren zur Frischluftversorgung eingesetzten Frischluftsystem des Fahrerbedienstands zusammenwirkt, um eine Frischluftanreicherung im Bereich der Sitzkonsole zu erhöhen. Vorstellbar wäre es, dass das Frischluftsystem der Sitzkonsole gemeinsam mit einem am Bedienpult des Fahrerbedienstands angeordneten Frischluftsystem betrieben wird, um entgegengesetzte, aufeinandertreffende Frischluftströme zu erzeugen, die zu günstigen Verwirbelungseffekten führen, wodurch sich eine Frischluftatmosphäre länger im Bereich des Bedieners aufrechterhalten lässt.

Insbesondere lässt sich ein Frischluftvolumenstrom des an der Sitzkonsole vorgesehenen Frischluftsystems mittels Drehzahlanpassung der Ventilatoreinheit regulieren. Vorstellbar wäre es, dass sich die Drehzahl der Ventilatoreinheit anhand eines Bedienelements einstellen lässt, welches unmittelbar an der Sitzkonsole, insbesondere direkt am Frischluftsystem, an einem Bedienpult des Fahrerbedienstands und/oder an einem gesondert vom Fahrerbedienstand gebildeten Außenbedienstand der Straßenbaumaschine zur Verfügung gestellt wird.

Die vorliegende Erfindung wird anhand der folgenden Figuren genauer erläutert. Es zeigen:
- Figur 1: eine Straßenbaumaschine in Form eines Straßenfertigers,
- Figur 2: eine Straßenbaumaschine in Form eines Beschickerfahrzeugs für einen Straßenfertiger,
- Figur 3: eine Frontansicht einer Sitzkonsole mit Frischluftsystem,
- Figur 4: eine Seitenansicht der Sitzkonsole mit Frischluftsystem aus Figur 3,
- Figur 5: eine perspektivische Darstellung der Sitzkonsole mit Frischluftsystem aus den Figuren 3 und 4,
- Figur 6: eine Frontansicht des Frischluftsystems in isolierter Darstellung,
- Figur 7: eine Schnittdarstellung des Frischluftsystems aus Figur 6,
- Figur 8: eine perspektivische Darstellung des Frischluftsystems aus Figur 6,
- Figur 9: eine weitere perspektivische Darstellung des Frischluftsystems aus Figur 6,
- Figur 10: eine Sitzkonsole mit einem Frischluftsystem zur Frischluft- und zur Luftbarriereerzeugung, und
- Figur 11: gesonderte Frischluftsysteme zur Erzeugung aufeinandertreffender Frischluftströmungen.

Gleiche technische Komponenten sind in den Figuren durchgängig mit denselben Bezugszeichen versehen.

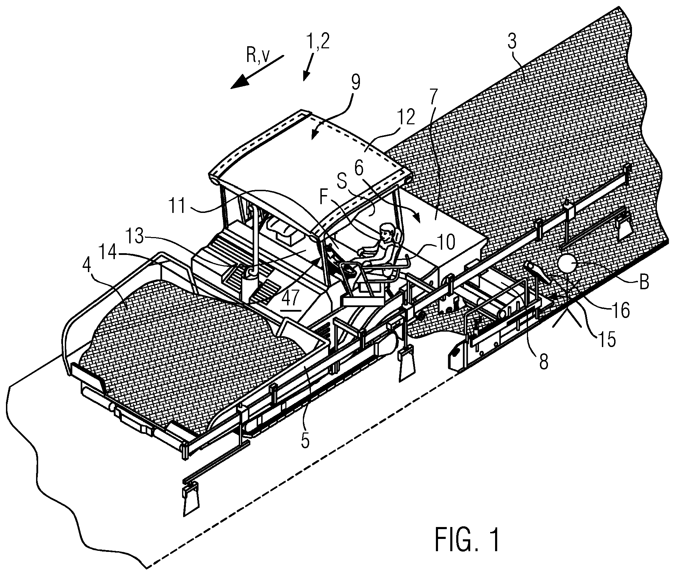

Figur 1 zeigt eine Straßenbaumaschine 1, die als Straßenfertiger 2 zum Herstellen einer neuen Einbauschicht 3 konfiguriert ist. Der Straßenfertiger 2 stellt die neue Einbauschicht 3 in Fahrtrichtung R mit einer Einbaugeschwindigkeit v her. Dafür setzt der Straßenfertiger 2 Einbaumaterial 4 ein, welches in einem vorne an ihm ausgebildeten Gutbunker 5 bevorratet ist. Aus dem Gutbunker 5 wird das darin bevorratete Einbaumaterial 4 mittels einer nicht dargestellten Längsfördereinrichtung entgegen der Fahrtrichtung R zu einer Einbaubohle 6 transportiert, die dazu ausgebildet ist, das ihr vorgelegte Einbaumaterial 4 zur neuen Einbauschicht 3 zu verdichten.

Die in Figur 1 gezeigte Einbaubohle 6 ist als Ausziehbohle konfiguriert. Die Einbaubohle 6 verfügt über eine Grundbohle 7 und seitliche Ausziehteile 8 zum Einstellen einer gewünschten Einbaubreite der neuen Einbauschicht 3.

Der Straßenfertiger 2 aus Figur 1 umfasst einen Fahrerbedienstand 9 für einen Fahrer F. Figur 1 zeigt, dass der Fahrerbedienstand 9 zur Seite S hin und nach hinten offen ausgebildet ist, sprich darauf, ohne Gegenmaßnahmen durchzuführen, im Wesentlichen die atmosphärischen Bedingungen, d.h. die Luftqualität, aus der Umgebung des Fahrerbedienstands 9 vorliegen.

In Figur 1 sitzt der Fahrer F auf einer schwenkbar konfigurierten Sitzkonsole 10, mittels welcher er über eine Fahrerbedienplattform 11 hinausgeschwenkt, seitlich des Fahrerbedienstands 9 positioniert ist, wodurch er den Bereich neben dem Straßenfertiger 2 gut überblicken kann. In dieser über die Fahrerbedienplattform 11 hinausgeschwenkten Position sitzt der Fahrer F allerdings nicht mehr hinter einer am Dachaufbau 12 vorgesehenen Frontscheibe 13, sodass er aus dem Gutbunker 5 kommenden Dämpfen und/oder Aerosolen sowie auch Dämpfen und/oder Aerosolen aus dem Bereich der Einbaubohle 6 stärker ausgesetzt ist.

Auf dem Fahrerbedienstand 9 des Straßenfertigers 2 ist für den Fahrer F ein Bedienpult 14 vorgesehen. Das Bedienpult 14 ist zum Steuern und Überwachen von mittels des Straßenfertigers 2 durchführbaren Prozessen konfiguriert. Beispielsweise kann der Fahrer F am Bedienpult 14 die Geschwindigkeit v des Straßenfertigers 2 in Fahrtrichtung R einstellen.

Ferner zeigt Figur 1 einen Außenbedienstand 15, der außen an der Einbaubohle 6 einen Arbeitsplatz für einen Bohlenbediener B schafft, um daran Prozesse des Straßenfertigers 2, insbesondere der Einbaubohle 6 zu steuern und zu überwachen. Dafür ist am Außenbedienstand 15 ein weiteres Bedienpult 16 vorgesehen.

Die in Figur 1 am Straßenfertiger 2 zur Umgebung hin offen ausgebildeten Fahrer- und Außenbedienstände 9, 15 sind grundsätzlich aufgrund deren offener Ausführung gut durchlüftet, werden allerdings auch von den während des Einbaus entstehenden Dämpfen und/oder Aerosolen erreicht.

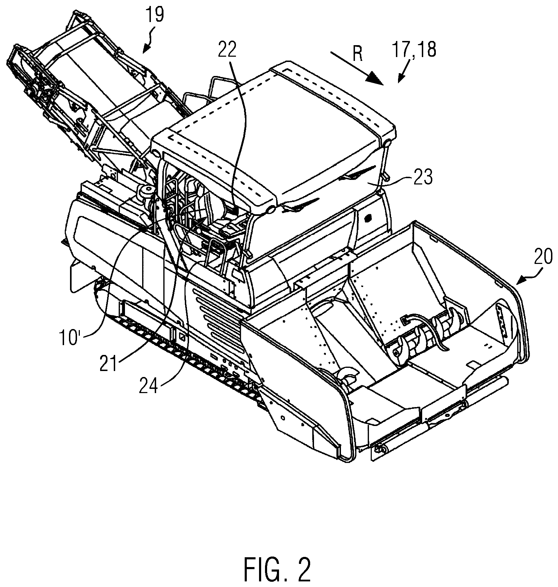

Figur 2 zeigt eine weitere Straßenbaumaschine 17, die in Form eines Beschickerfahrzeugs 18 für einen Straßenfertiger 2 konfiguriert ist. Ein solches Beschickerfahrzeug 18 wird in der Praxis dafür eingesetzt, einen Straßenfertiger 2 gemäß Figur 1 mit Einbaumaterial 4 zu versorgen. Dafür fährt das Beschickerfahrzeug 18 in Fahrtrichtung R vor dem Straßenfertiger 2 und wirft mittels einer am Beschickerfahrzeug 18 ausgebildeten Fördereinrichtung 19 Einbaumaterial 4 in den Gutbunker 5 des ihm hinterherfahrenden Straßenfertigers 2.

Das Beschickerfahrzeug 18 aus Figur 2 verfügt über einen Gutbunker 20 zur Aufnahme von Einbaumaterial 4. Die Fördereinrichtung 19 reicht bis zum Gutbunker 20 und kann somit das darin bevorratete Einbaumaterial 4 aus diesem heraus, entgegen der Fahrtrichtung R in Richtung des nachfolgenden Straßenfertigers 2 transportieren und diesem übergeben.

Gemäß Figur 2 verfügt das Beschickerfahrzeug 19 über einen Fahrerbedientand 21. Auch dieser Fahrerbedienstand 21 ist zu den Seiten hin und nach hinten offen ausgebildet, sodass Dämpfe und/oder Aerosole über die offenen Seiten des Fahrerbedienstands 21 und von hinten zum Fahrer F gelangen können. Auf dem Fahrerbedienstand 21 ist eine Sitzkonsole 10' für den Fahrer F und ein Bedienpult 22 zum Steuern und Überwachen der vom Beschickerfahrzeug 19 durchgeführten Prozesse gelagert. Das Bedienpult 22 ist in Figur 2 hinter einer Frontscheibe 23 des Beschickerfahrzeugs 18 positioniert, lässt sich jedoch zusammen mit der Sitzkonsole 10' in eine Position neben dem Fahrerbedienstand 21 bringen, das heißt über dessen Fahrerbedienplattform hinaus schwenken.

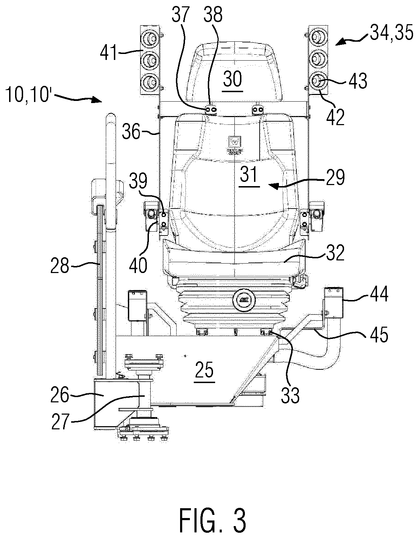

Figur 3 zeigt die Sitzkonsole 10, 10' in isolierter Darstellung. Die Sitzkonsole 10, 10' verfügt über einen Konsolenboden 25, der am Fahrerbedienstand 9, 21 schwenkbar gelagert ist. Der Konsolenboden 25 ist an einem Schwenkarm 26 montiert, dessen vorderes Ende an ein Schwenklager 27 gekoppelt ist. Auf dem Schwenkarm 26 ist eine Absturzsicherung 28 montiert.

Die Sitzkonsole 10, 10' aus Figur 3 umfasst ferner einen (Fahrer-)Sitz 29, der auf dem Konsolenboden 25 montiert ist. Der Sitz 29 verfügt über eine Kopfstütze 30, eine Rückenlehne 31 sowie einen Sitzboden 32. Der Sitzboden 32 ist in Figur 3 mittels einer Schieneneinrichtung 33 auf dem Konsolenboden 25 befestigt und kann damit auf dem Konsolenboden 25 in verschiedene Positionen verschoben werden.

An der Sitzkonsole 10, 10' aus Figur 3 ist ein Frischluftsystem 34 vorgesehen. Das in Figur 3 gezeigte Frischluftsystem 34 ist als Hang-On-Einrichtung 35 zur lösbaren Befestigung am Sitz 29 konfiguriert. Das Frischluftsystem 34 verfügt über eine Halterung 36 mit Befestigungseinheiten 37 zur lösbaren Anbringung an Kopfstützenstangen 38 sowie mit Befestigungseinheiten 39 zur lösbaren Anbringung an Sitzlehnenhaltern 40. An der Halterung 36 sind zwei Düseneinheiten 41 befestigt. Die beiden Düseneinheiten 41 sind auf beiden Seiten der Kopfstütze 30 positioniert. Die Düseneinheiten 41 weisen jeweils drei Frischluftöffnungen 42 mit verstellbaren Lamellen 43 auf.

Weiter zeigt Figur 3, dass das Frischluftsystem 34 auch auf beiden Seiten des Sitzbodens 32 weitere Düseneinheiten 44 aufweist. Diese weiteren Düseneinheiten 44 werden jeweils mittels weiteren Halterungen 45 am Konsolenboden 25 gestützt.

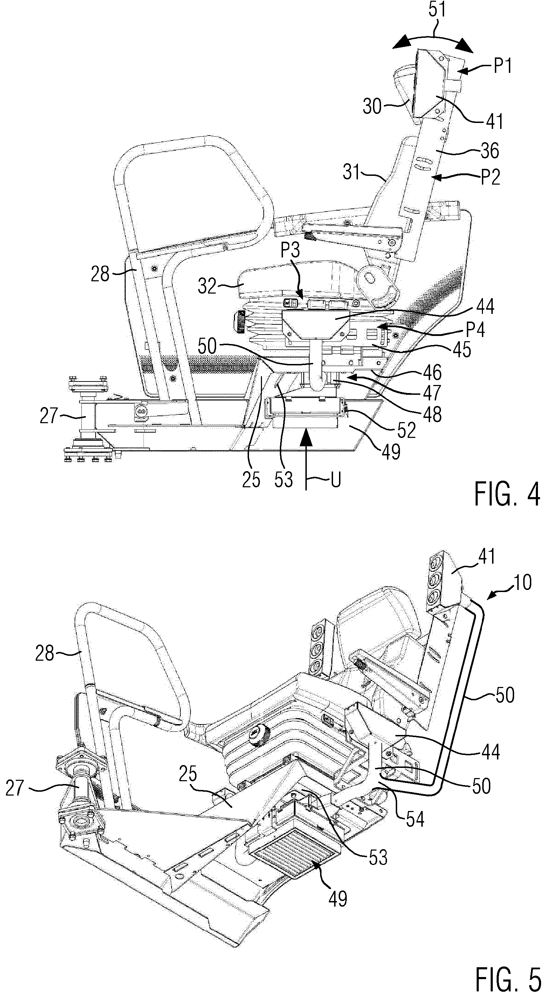

Figur 4 zeigt eine Seitenansicht der Sitzkonsole 10 aus Figur 3. An einer Unterseite 46 des Konsolenbodens 25 ist eine Ventilatoreinheit 47 befestigt. Die Ventilatoreinheit 47 weist einen Ventilator 48 auf, der in Figur 4 als Radialventilator konfiguriert ist. Unterhalb des Ventilators 48 ist eine Filtereinheit 49 angeordnet. Die Filtereinheit 49 ist an der Ansaugseite des Ventilators 48 angeschlossen. Durch den Ventilator 48 kann Umgebungsluft U durch die Filtereinheit 49 angesaugt werden, wobei die dadurch gefilterte Frischluft vom Ventilator 48 über Luftkanäle 50 zu den jeweiligen Düseneinheiten 41, 44 gefördert wird.

Weiter zeigt Figur 4, dass die seitlich der Kopfstütze 30 positionierte Düseneinheit 41 schwenkbar an der Halterung 36 montiert ist. Dies ist schematisch durch den Doppelpfeil 51 dargestellt. In Figur 4 ist die Düseneinheit 41 an einer oberen Position P1 an der Halterung 36 befestigt, um seitlich der Kopfstütze 30 montiert zu sein. Gemäß Figur 4 lässt sich die Düseneinheit 41 an der Halterung 36 auch an einer unteren Position P2 befestigen, um seitlich der Rückenlehne 31 positioniert zu sein.

Ferner zeigt Figur 4, dass die seitlich des Sitzbodens 32 positionierte Düseneinheit 44 an der Halterung 45 in einer vorderen Position P3 montiert ist. Die Düseneinheit 44 kann des Weiteren an einer hinteren Position P4 an der Halterung 45 befestigt sein. Damit lässt sich die Düseneinheit 44, je nachdem in welcher Position der Sitz 29 mittels der Schienenanordnung 33 verstellt ist, dementsprechend positionieren.

Die bezüglich der Positionen P1, P2, P3, P4 beschriebenen Positionierungsmöglichkeiten der in Figur 4 gezeigten Düseneinheiten 41, 44 werden in vergleichbarer Weise auch auf der anderen Seite der Sitzkonsole 10, 10' bereitgestellt.

Für die Filtereinheit 49 ist zur lösbaren Anbringung an der Ventilatoreinheit 47 ein Schnellspanner 52 vorgesehen. Es wäre auch möglich, dass die Filtereinheit 49 an einer Ansaugöffnung der Ventilatoreinheit 47 einfach durch Form- und/oder Kraftschluss aufgesteckt montiert ist.

Figur 4 zeigt, dass sowohl die Ventilatoreinheit 47 als auch die daran befestigte Filtereinheit 49 innerhalb einer durch den Konsolenboden 25 geschaffenen Stufe 53 aufgenommen sind. Die Ventilatoreinheit 47 sowie die Filtereinheit 49 sind damit gut geschützt untergebracht und sind insbesondere von unten her gut zugänglich, wenn die Sitzkonsole 10, 10' im ausgeschwenkten Zustand gemäß Figur 1 positioniert ist.

Figur 5 zeigt eine perspektivische Darstellung der Sitzkonsole 10. Die Düseneinheiten 41, 44 werden mittels der Luftkanäle 50 von der Ventilatoreinheit 47 mit gefilterter Frischluft versorgt. Die Luftkanäle 50 sind über ein Y-Stück 54 miteinander verbunden.

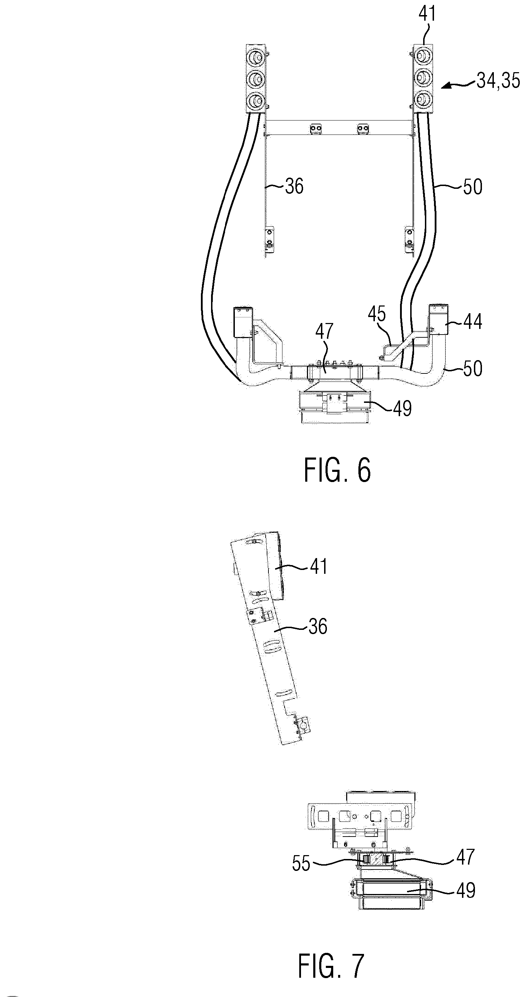

Figur 6 zeigt das Frischluftsystem 34 in isolierter Darstellung. Das in Figur 6 gezeigte Frischluftsystem 34 liegt als Hang-On-Einrichtung 35 vor und lässt sich problemlos an bestehenden Sitzkonsolen 10, 10' nachrüsten.

Figur 7 zeigt eine Schnittdarstellung des Frischluftsystems 34 aus Figur 6, insbesondere einen Vertikalschnitt durch die Ventilatoreinheit 47. Die Ventilatoreinheit 47 weist einen Radialventilator 55 auf.

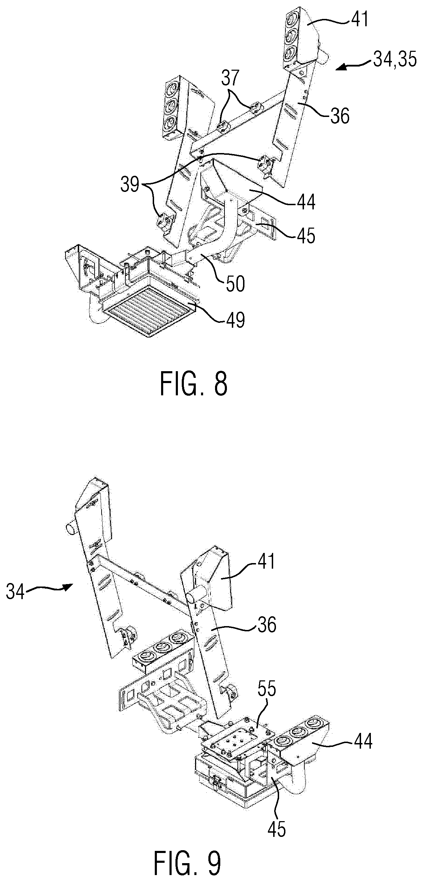

Figur 8 zeigt eine perspektivische Darstellung des Frischluftsystems 34. Insbesondere zeigt Figur 8 die Befestigungsmittel 37 zur Befestigung der Halterung 36 an den Kopfstützenstangen 38 sowie ferner die Befestigungsmittel 39 zur lösbaren Anbringung an den Sitzlehnenhaltern 40.

Figur 9 zeigt das als Hang-On-Einrichtung 35 konfigurierte Frischluftsystem 34 aus einer weiteren perspektivischen Darstellung. Insbesondere zeigt Figur 9 eine Montageplatte 55 zur lösbaren Anbringung der Ventilatoreinheit 47 an der Unterseite 46 des Konsolenbodens 25.

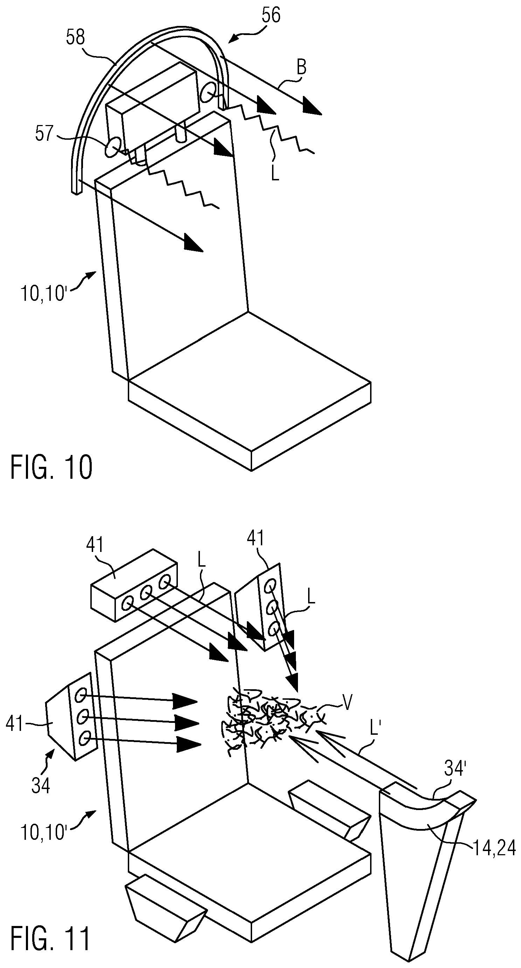

Figur 10 zeigt in schematischer Darstellung die Sitzkonsole 10, 10' mit einer Düseneinheit 56, die dazu konfiguriert ist, sowohl eine Frischluftströmung L als auch eine Luftbarriere B zu erzeugen. Die Frischluftströmung L wird dabei von der Luftbarriere B eingehaust, sodass sich die Frischluftströmung L länger im Bereich der Person, die auf der Sitzkonsole 10, 10' sitzt, halten lässt. Die Luftbarriere B hat auch den Zweck, von außen aufsteigende Dämpfe und/oder Aerosole abzuschirmen, damit der Bediener zuverlässig in einer Frischluftatmosphäre auf der Sitzkonsole 10, 10' sitzt.

Zur Erzeugung der Frischluftströmung L weist gemäß Figur 10 die Düseneinheit 56 zwei Frischluftöffnungen 57 auf. Ferner verfügt die Düseneinheit 56 eine bogenförmige Düse 58, um eine Luftbarriere B in Form eines Tunnels auszubilden, in dem die Frischluftströmung L eingehaust ist.

Figur 11 zeigt die Sitzkonsole 10, 10' mit daran angeordneten Düseneinheiten 41, deren Frischluftströme L auf einen entgegenkommenden Frischluftstrom L' aus dem Bedienpult 14, 22 treffen. Die aufeinandertreffenden Frischluftströmungen L, L' sorgen für eine Verwirbelung V von Frischluft in einem Bereich unmittelbar vorderhalb einem auf der Sitzkonsole 10, 10' positionierten Bediener bzw. Fahrer F, damit sich in dessen Nähe die Frischluftatmosphäre länger aufrechterhalten lässt.

## Patentansprüche

1. Straßenbaumaschine (1), die in Form eines Straßenfertigers (2) oder eines Beschickerfahrzeugs (18) für einen Straßenfertiger (2) vorliegt, umfassend einen zumindest zu einer Seite (S) hin offen ausgebildeten Fahrerbedienstand (9, 21) für einen Fahrer (F) der Straßenbaumaschine (1), wobei der Fahrerbedienstand (9, 21) mindestens eine Sitzkonsole (10) aufweist, **dadurch gekennzeichnet, dass** die Sitzkonsole (10) ein Frischluftsystem (34) umfasst, zum Erzeugen einer Frischluftströmung (L) mittels der Sitzkonsole.

2. Straßenbaumaschine nach Anspruch 1, **dadurch gekennzeichnet, dass** die Sitzkonsole (10) einen, insbesondere schwenkbar und/oder verschiebbar gelagerten, Konsolenboden (25) aufweist, an dessen Unterseite (46) mindestens eine Ventilatoreinheit (47) des Frischluftsystems (34) befestigt ist.

3. Straßenbaumaschine nach Anspruch 2, **dadurch gekennzeichnet, dass** die Ventilatoreinheit (47) zur lösbaren oder festen Anbringung einer Filtereinheit (49) konfiguriert ist.

4. Straßenbaumaschine nach Anspruch 2 oder 3, **dadurch gekennzeichnet, dass** die Ventilatoreinheit (47) mindestens einen elektrisch, hydraulisch oder pneumatisch betriebenen Ventilator (48) aufweist.

5. Straßenbaumaschine nach Anspruch 4, **dadurch gekennzeichnet, dass** der Ventilator (48) ein Radialventilator oder ein Axialventilator ist.

6. Straßenbaumaschine nach einem der Ansprüche 2 bis 5, **dadurch gekennzeichnet, dass** die Ventilatoreinheit (47) mehrere, parallel ansteuerbare Ventilatoren (48) vorsieht.

7. Straßenbaumaschine nach einem der Ansprüche 2 bis 6, **dadurch gekennzeichnet, dass** das Frischluftsystem (34) mindestens eine Filtereinheit (49) aufweist, die einer Ansaugseite und/oder an einer Ausblasseite der Ventilatoreinheit (47) angeordnet ist.

8. Straßenbaumaschine nach Anspruch 7, **dadurch gekennzeichnet, dass** die Filtereinheit (49) gemeinsam mit der Ventilatoreinheit (47) unterhalb des Konsolenbodens (25) positioniert ist und/oder dass die Filtereinheit (49) und die Ventilatoreinheit (47) separate, aneinander koppelbare Module ausbilden.

9. Straßenbaumaschine nach einem der Ansprüche 2 bis 8, **dadurch gekennzeichnet, dass** das Frischluftsystem (34) mindestens eine Düseneinheit (41) für Frischluft aufweist, die sich sowohl neben einer Kopfstütze (30) der Sitzkonsole (10) als auch neben einer Rückenlehne (31) der Sitzkonsole (10) anordnen lässt.

10. Straßenbaumaschine nach Anspruch 9, **dadurch gekennzeichnet, dass** das Frischluftsystem (34) mindestens eine weitere Düseneinheit (44) für Frischluft aufweist, die sich seitlich eines Sitzbodens (32) der Sitzkonsole (10) in verschiedenen Positionen (P3, P4) anordnen lässt.

11. Straßenbaumaschine nach Anspruch 9 oder 10, **dadurch gekennzeichnet, dass** die Düseneinheit (41, 44) wenigstens eine Frischluftöffnung (42) mit einer verstellbaren Lamelle (43) aufweist.

12. Straßenbaumaschine nach einem der Anspruch 9 bis 11, **dadurch gekennzeichnet, dass** die Düseneinheit (41, 44, 56) sowohl mindestens eine Frischluftöffnung (42, 57) für Frischluft als auch mindestens eine Düse (58) zum Ausbilden einer Luftbarriere (B) aufweist.

13. Straßenbaumaschine nach einem der Ansprüche 9 bis 12, **dadurch gekennzeichnet, dass** von der Ventilatoreinheit (47) wenigstens ein Luftkanal (50), insbesondere mehrere Luftkanäle (50), wegführt, um jeweils mindestens eine Düseneinheit (41, 44) mit Frischluft (L) zu versorgen.

14. Straßenbaumaschine nach einem der Ansprüche 9 bis 13, **dadurch gekennzeichnet, dass** die Düseneinheit (41) verstellbar, insbesondere schwenkbar, angeordnet ist.

15. Straßenbaumaschine nach einem der vorangehenden Ansprüche, **dadurch gekennzeichnet, dass** das an der Sitzkonsole (10) vorgesehene Frischluftsystem (34) gemeinsam mit einem weiteren, an einem Bedienpult (14, 22) des Fahrerbedienstands (9, 21) angeordneten Frischluftsystem (34, 34') einsetzbar ist.

16. Straßenbaumaschine nach Anspruch 15, **dadurch gekennzeichnet, dass** die beiden Frischluftsysteme (34, 34') zum Erzeugen entgegengerichteter, aufeinandertreffender Frischluftströme (L, L') konfiguriert sind, die insbesondere zumindest bereichsweise von der Luftbarriere (B) umgeben sind.

17. Straßenbaumaschine nach einem der Ansprüche 2 bis 16, **dadurch gekennzeichnet, dass** durch Drehzahlanpassung der Ventilatoreinheit (47) ein aus dem Frischluftsystem (34) ausströmender Frischluftvolumenstrom variierbar ist.

18. Straßenbaumaschine nach einem der vorangehenden Ansprüche, **dadurch gekennzeichnet, dass** zur Drehzahlanpassung der Ventilatoreinheit (47) an der Sitzkonsole (10), insbesondere direkt am Frischluftsystem (34), an einem Bedienpult (14, 22) des Fahrerbedienstands (9, 21) und/oder an einem gesondert vom Fahrerbedienstand (9, 21) ausgebildeten Außenbedienstand (15) der Straßenbaumaschine (1) mindestens ein Bedienelement (60) vorgesehen ist.

19. Straßenbaumaschine nach einem der vorangehenden Ansprüche, **dadurch gekennzeichnet, dass** das Frischluftsystem (34) als Hang-On-Einrichtung (35) für die Sitzkonsole (10) vorliegt oder in der Sitzkonsole (10) integriert ausgebildet ist.

20. Verfahren zum Erzeugen einer Frischluftströmung (L) mittels einer Sitzkonsole (10) eines zur Seite (S) hin offen ausgebildeten Fahrerbedienstands (9, 21) einer Straßenbaumaschine (1), die als Straßenfertiger (2) oder als Beschickerfahrzeug (18) für einen Straßenfertiger (2) vorliegt.

## Claims

1. Road construction machine (1), which is configured in the form of a road paver (2) or a feeder vehicle (18) for a road paver (2), comprising a driver's control station (9, 21), which is open at least to one side (S), for a driver (F) of the road construction machine (1), wherein the driver's control station (9, 21) has at least one seat console (10), **characterized in that** the seat console (10) comprises a fresh air system (34) for generating a fresh air flow (L) by means of the seat console.

2. Road construction machine according to claim 1, **characterized in that** the seat console (10) comprises a console floor (25), which is in particular pivotably and/or displaceably mounted, to the underside (46) of which at least one fan unit (47) of the fresh air system (34) is fastened.

3. Road construction machine according to claim 2, **characterized in that** the fan unit (47) is configured for detachable or fixed attachment of a filter unit (49).

4. Road construction machine according to claim 2 or 3, **characterized in that** the fan unit (47) comprises at least one electrically, hydraulically or pneumatically operated fan (48).

5. Road construction machine according to claim 4, **characterized in that** the fan (48) is a radial fan or an axial fan.

6. Road construction machine according to one of claims 2 to 5, **characterized in that** the fan unit (47) provides a plurality of fans (48) which can be controlled in parallel.

7. Road construction machine according to one of claims 2 to 6, **characterized in that** the fresh air system (34) comprises at least one filter unit (49) arranged on an intake side and/or on an exhaust side of the fan unit (47).

8. Road construction machine according to claim 7, **characterized in that** the filter unit (49) is positioned together with the fan unit (47) below the console floor (25) and/or **in that** the filter unit (49) and the fan unit (47) form separate modules which can be coupled to one another.

9. Road construction machine according to one of claims 2 to 8, **characterized in that** the fresh air system (34) comprises at least one nozzle unit (41) for fresh air, which can be arranged both next to a headrest (30) of the seat console (10) and next to a backrest (31) of the seat console (10).

10. Road construction machine according to claim 9, **characterized in that** the fresh air system (34) has at least one further nozzle unit (44) for fresh air, which can be arranged in different positions (P3, P4) laterally of a seat base (32) of the seat console (10).

11. Road construction machine according to claim 9 or 10, **characterized in that** the nozzle unit (41, 44) comprises at least one fresh air opening (42) with an adjustable lamella (43).

12. Road construction machine according to one of claims 9 to 11, **characterized in that** the nozzle unit (41, 44, 56) has both at least one fresh air opening (42, 57) for fresh air and at least one nozzle (58) for forming an air barrier (B).

13. Road construction machine according to one of claims 9 to 12, **characterized in that** at least one air duct (50), in particular several air ducts (50), leads away from the fan unit (47) in order to supply at least one nozzle unit (41, 44) with fresh air (L) in each case.

14. Road construction machine according to one of claims 9 to 13, **characterized in that** the nozzle unit (41) is arranged adjustably, in particular pivotably.

15. Road construction machine according to one of the preceding claims, **characterized in that** the fresh air system (34) provided on the seat console (10) can be used together with a further fresh air system (34, 34') arranged on a control panel (14, 22) of the driver's control station (9, 21).

16. Road construction machine according to claim 15, **characterized in that** the two fresh air systems (34, 34') are configured to generate oppositely directed fresh air flows (L, L') which converge and are surrounded, in particular at least in some areas, by the air barrier (B).

17. Road construction machine according to one of claims 2 to 16, **characterized in that** a fresh air flow rate flowing out of the fresh air system (34) can be varied by adjusting the speed of the fan unit (47).

18. Road construction machine according to one of the preceding claims, **characterized in that** at least one control element (60) is provided for adjusting the speed of the fan unit (47) on the seat console (10), in particular directly on the fresh air system (34), on a control panel (14, 22) of the driver's control station (9, 21) and/or on an external control station (15) of the road construction machine (1) formed separately from the driver's control station (9, 21).

19. Road construction machine according to one of the preceding claims, **characterized in that** the fresh air system (34) is available as a hang-on system (35) for the seat console (10) or is integrated in the seat console (10).

20. Method for generating a fresh air flow (L) by means of a seat console (10) of a driver's control station (9, 21), which is open to the side (S), of a road construction machine (1) which is configured as a road paver (2) or as a feeder vehicle (18) for a road paver (2).

## Revendications

1. Machine de construction routière (1) sous forme d'un finisseur d'asphalte (2) ou d'un alimentateur mobile (18) pour un finisseur d'asphalte (2), comprenant un poste de commande de conducteur (9, 21) ouvert au moins d'un côté (S) pour un conducteur (F) de la machine de construction routière (1), dans laquelle le poste de commande de conducteur (9, 21) comporte au moins une console de siège (10), **caractérisée en ce que** la console de siège (10) comprend un système d'air frais (34) pour générer un flux d'air frais (L) au moyen de la console de siège.

2. Machine de construction routière selon la revendication 1, **caractérisée en ce que** la console de siège (10) comporte une base de console (25), en particulier montée de manière pivotante et/ou coulissante, sur la face inférieure (46) de laquelle est fixée au moins une unité de ventilateur (47) du système d'air frais (34).

3. Machine de construction routière selon la revendication 2, **caractérisée en ce que** l'unité de ventilateur (47) est configurée pour une fixation amovible ou fixe d'une unité de filtre (49).

4. Machine de construction routière selon la revendication 2 ou 3, **caractérisée en ce que** l'unité de ventilateur (47) comporte au moins un ventilateur (48) à entraînement électrique, hydraulique ou pneumatique.

5. Machine de construction routière selon la revendication 4, **caractérisée en ce que** le ventilateur (48) est un ventilateur radial ou un ventilateur axial.

6. Machine de construction routière selon l'une des revendications 2 à 5, **caractérisée en ce que** l'unité de ventilateur (47) comporte une pluralité de ventilateurs (48) commandés en parallèle.

7. Machine de construction routière selon l'une des revendications 2 à 6, **caractérisée en ce que** le système d'air frais (34) comporte au moins une unité de filtre (49) qui est agencée d'un côté aspiration et/ou d'un côté refoulement de l'unité de ventilateur (47).

8. Machine de construction routière selon la revendication 7, **caractérisée en ce que** l'unité de filtre (49) est positionnée conjointement à l'unité de ventilateur (47) sous la base de console (25) et/ou **en ce que** l'unité de filtre (49) et l'unité de ventilateur (47) forment des modules séparés qui peuvent être couplés entre eux.

9. Machine de construction routière selon l'une des revendications 2 à 8, **caractérisée en ce que** le système d'air frais (34) comporte au moins une unité de buses (41) pour l'air frais, qui peut être agencée aussi bien à côté d'un appui-tête (30) de la console de siège (10) qu'à côté d'un dossier (31) de la console de siège (10).

10. Machine de construction routière selon la revendication 9, **caractérisée en ce que** le système d'air frais (34) comporte au moins une autre unité de buses (44) pour l'air frais, qui peut être agencée latéralement par rapport à une base de siège (32) de la console de siège (10) dans différentes positions (P3, P4).

11. Machine de construction routière selon la revendication 9 ou 10, **caractérisée en ce que** l'unité de buses (41, 44) comporte au moins une ouverture d'air frais (42) avec une lamelle réglable (43).

12. Machine de construction routière selon l'une des revendications 9 à 11, **caractérisée en ce que** l'unité de buses (41, 44, 56) comporte à la fois au moins une ouverture d'air frais (42, 57) pour l'air frais et au moins une buse (58) pour former un rideau d'air (B).

13. Machine de construction routière selon l'une des revendications 9 à 12, **caractérisée en ce qu'**au moins un conduit d'air (50), en particulier une pluralité de conduits d'air (50), partent de l'unité de ventilateur (47) pour alimenter chacun au moins une unité de buses (41, 44) en air frais (L).

14. Machine de construction routière selon l'une des revendications 9 à 13, **caractérisée en ce que** l'unité de buses (41) est agencée de manière réglable, en particulier de manière pivotante.

15. Machine de construction routière selon l'une des revendications précédentes, **caractérisée en ce que** le système d'air frais (34) pourvu sur la console de siège (10) peut être utilisé conjointement à un autre système d'air frais (34, 34') agencé sur un panneau de commande (14, 22) du poste de commande de conducteur (9, 21).

16. Machine de construction routière selon la revendication 15, **caractérisée en ce que** les deux systèmes d'air frais (34, 34') sont configurés pour générer des flux d'air frais opposés et convergents (L, L') qui sont en particulier au moins partiellement entourés par le rideau d'air (B).

17. Machine de construction routière selon l'une des revendications 2 à 16, **caractérisée en ce qu'**un débit volumique d'air frais sortant du système d'air frais (34) peut être modifié en réglant la vitesse de rotation de l'unité de ventilateur (47).

18. Machine de construction routière selon l'une des revendications précédentes, **caractérisée en ce qu'**au moins un élément de commande (60) est pourvu pour régler la vitesse de rotation de l'unité de ventilateur (47) sur la console de siège (10), en particulier directement sur le système d'air frais (34), sur un panneau de commande (14, 22) du poste de commande de conducteur (9, 21) et/ou sur un poste de commande externe (15) de la machine de construction routière (1) pourvu séparément du poste de commande de conducteur (9, 21).

19. Machine de construction routière selon l'une des revendications précédentes, **caractérisée en ce que** le système d'air frais (34) est pourvu sous forme d'un dispositif suspendu (35) pour la console de siège (10) ou est intégré dans la console de siège (10).

20. Procédé de génération d'un flux d'air frais (L) au moyen d'une console de siège (10) d'un poste de commande de conducteur (9, 21) ouvert d'un côté (S) d'une machine de construction routière (1), qui se présente sous forme d'un finisseur d'asphalte (2) ou d'un alimentateur mobile (18) pour un finisseur d'asphalte (2).
